# EUROPEAN PATENT SPECIFICATION

(11) **EP 2 554 610 B1**
(45) Date of publication and mention of the grant of the patent: **15.11.2017**
(21) Application number: 11762303.3
(22) Date of filing: 14.01.2011
(51) Int. Cl.: C09D 11/00, B41J 2/01, B41M 5/00

(54) **INKJET INK AND METHOD FOR FORMING INKJET IMAGE**
TINTENSTRAHLTINTE UND VERFAHREN ZUR FORMUNG EINES TINTENSTRAHLBILDES
ENCRE POUR JET D'ENCRE ET PROCÉDÉ DE FABRICATION D'UNE IMAGE PAR JET D'ENCRE

(30) Priority: 31.03.2010 JP 2010080721
(43) Date of publication of application: 06.02.2013
(73) Proprietor: Konica Minolta Holdings, Inc., Tokyo 100-7015 (JP)
(72) Inventor: SEKIGUCHI Tomoe, Hino-shi Tokyo 191-8511 (JP); IIJIMA Hirotaka, Hino-shi Tokyo 191-8511 (JP); MAEDA Akio, Hino-shi Tokyo 191-8511 (JP)
(74) Representative: Henkel, Breuer & Partner
(86) International application number: PCT/JP2011/050508
(87) International publication number: WO 2011/122062

(56) References cited:
- WO-A1-95/01404
- JP-A- 2 132 168
- JP-A- 6 049 399
- JP-A- 10 140 060
- JP-A- 10 279 862
- JP-A- 10 292 142
- JP-A- 55 005 896
- JP-A- 2002 060 661
- JP-A- 2002 226 737
- JP-A- 2003 105 241
- JP-A- 2005 126 508
- JP-A- 2005 126 509
- JP-A- 2008 221 781
- JP-A- 2009 510 184
- US-A1- 2005 223 939

## Description

### TECHNICAL FIELD

The present invention relates to an inkjet ink and in particular to an inkjet ink and a method for forming an inkjet image by use of the same.

### TECHNICAL BACKGROUND

Inkjet recording is a recording method in which ink droplets are ejected through a fine nozzle head to print on a substrate material, making it feasible to design an energy-saving or compact printer, and becomes popular for use in homes or offices.

Inks for use in such a recording method are mainly classified into an aqueous type and a nonaqueous type. There is broadly used an aqueous type ink in which an aqueous-soluble dye or an aqueous-soluble pigment is dissolved in an aqueous-soluble solvent and water. A recorded material printed by an aqueous ink is generally inferior in waterfastness, in which interaction of cellulose as a component of plain paper with a solvent often causes curling or cockling. This causes a big problem in printed materials for preservation in an office. Recently, two-sided printing is broadly conducted in document printing in offices in terms of resource saving. When curling or cockling is caused immediately after being printed on the front face in two-sided printing, there occur fatal problems as a printer, such as staining on the paper surface due to friction onto a head or ejection troubles.

Accordingly, oil-based inks in which plant oil or the like is used as a main solvent are known (as described in, for example, Patent document 1). Such an oil-based ink, which is low in interaction with a cellulose, can inhibit curling or cockling and superior in waterfastness.

However, a plain paper printing matter recorded with an oil-based ink is in such a state that a pigment as a coloring material a low-volatile solvent exists together with a pigment as a coloring material on the surface or in the interior of plain paper. The strength of an image is low in such a state, producing problems that the image was easily rubbed off by friction between sheets of printing paper or color transfer easily occurred.

Further, an oil-based ink exhibits a high permeability into plain paper, resulting in a great deal of print-through. Accordingly, a means to control an ink ejection amount was sometimes applied when conducting two-sided printing but there were produced a problem that controlling an ink ejection amount resulted in a lowering of an optical density, making it difficult to attain satisfactory print quality. Furthermore, high permeability into plain paper easily causes blotchiness on the printed surface, producing a problem that fine lines or small point characters are blocked, resulting in deterioration in image reproducibility.

To dissolve these problems, there was proposed the use of an ultraviolet-curable ink in which the ink was ejected onto a substrate material, followed by exposure to ultraviolet rays to form an image. However, such an ultraviolet-curable ink required installation of a light source, leading to a printer of a high price and a large scale and rendering it difficult to bring out a merit of inkjet as a compact printer.

Further, a printer becomes a trend of increasing the number of ink droplets recorded per unit time in response to the requirement for accelerating a recording rate. Accordingly, the time interval of adjacent droplets reaching the recording medium becomes shorter. Specifically in single-path printing, the time interval of adjacent droplets reaching the recording medium becomes especially shorter. As a result, a lowering of image quality due to droplets getting together on recording paper became a problem. Such a phenomenon, which was caused within an extremely short time before ultraviolet curing, was not improved by the foregoing methods, becoming a problem.

To dissolve such a problem, there was proposed a recording method by use of a hot-melt ink, in which the ink was ejected, while being thermally melted and cooled to be solidified on the substrate (as described in, for example, Patent document 2). However, such a hot-melt ink necessitated an increased hardness of an ink to achieve enhanced abrasion resistance and thereby, a higher melting point was required, producing a problem that a printer became larger, leading to an increased system load. Further, there was also produced a problem that a large amount of wax was contained to control the hardness or melting point of an ink and thereby, the image surface became low glossy, such as wax.

### PRIOR ART LITERATURE

### PATENT DOCUMENT

- Patent document 1:: JP 2005-290035 A
- Patent document 2:: JP 09-194779 A

### SUMMARY OF THE INVENTION

### PROBLEM TO BE SOLVED

The present invention has come into being to solve the foregoing problems and it is an object of the present invention to provide an inkjet ink which exhibits a lower melting point than that of a so-called hot melt ink and therefore is reduced in system load, and is superior in continuous ejection stability, high aptitude for plain paper and excellent in text quality, fixability and image texture, and an inkjet image forming method by use thereof.

### MEANS FOR SOLVING THE PROBLEM

The foregoing object of the invention can be accomplished by the following constitution.
1. An inkjet ink containing an unsaturated fatty acid ester, a compound capable of allowing an ink composition to reversibly gel in an amount of 0.5 to 20% by mass, based on total mass of the ink, and a resin in an amount of 10 to 30% by mass, based on total mass of the ink.
2. The inkjet ink, as described in the foregoing 1, wherein the inkjet ink contains a metal soap.
3. The inkjet ink, as described in the foregoing 1 or 2, wherein the resin exhibits a weight average molecular weight of 1000 to 50000.
4. The inkjet ink, as described in any of the foregoing 1 to 3, wherein the unsaturated fatty acid ester exhibits an iodine value of 130 to 200.
5. The inkjet ink, as described in any of the foregoing 1 to 4, wherein the resin comprises one which is selected from a rosin resin or a terpene resin.
6. The inkjet ink, as described in any of the foregoing 1 to 5, wherein the resin comprises the rosin resin and the terpene resin.
7. A method of forming an inkjet image by using an inkjet ink, as described in any of the foregoing 1 to 6, the method comprising:
   ejecting the inkjet ink exhibiting a temperature higher than a temperature of a recording medium onto the recording medium to form an image.

### EFFECT OF THE INVENTION

The present invention can provide an inkjet ink which is low in system load, superior in continuous ejection stability, high in aptitude for plain paper and excellent in fixability, and an inkjet image forming method by use thereof

### EMBODIMENTS OF THE INVENTION

In the following, there will be described the embodiments of the invention, but the invention is not limited to these.

The inkjet ink of the invention is characterized in that the inkjet ink contains an unsaturated fatty acid ester, a compound capable of allowing an ink composition to reversibly gel in an amount of 0.5 to 20% by mass, based on total mass of the ink, and a resin in an amount of 10 to 30% by mass, based on total mass of the ink.

There can be obtained by the foregoing constitution an inkjet ink which is low in system load, superior in continuous ejection stability, high in plain paper compatibility and excellent in text quality and fixability.

There will be described the working mechanism of the invention.

The inkjet ink of the invention contains an unsaturated fatty acid ester, a compound capable of allowing an ink composition to gel in a reversible manner (which is also denoted as a gelling agent) at an amount of 0.5 to 20% by mass of the total mass of the ink, and a resin at an amount of 10 to 30% by mass of the total mass of the ink.

Inclusion of such a gelling agent makes it feasible to obtain a thermally reversible gel ink which is gelled at room temperature. The gel ink is heated to a temperature higher than a phase transition point, whereby inkjet recording is conducted in a sol (liquid) state, and after being ejected onto a recording medium of a temperature lower than the phase transition temperature of the gel ink, the temperature of the ink is promptly lowered to form a gel state. Gelling inhibits permeation of an ink into plain paper and prevents print through, leading to a high optical density and enhanced reproducibility of a thin line and a small point character. Further, misdirection caused by attraction between droplets can also be prevented, rendering it feasible to inhibit image deterioration such as beading or bleeding which is caused by misdirection which is caused in high-speed recording such as single-pass printing.

An image formed in a gel state is low in strength but an unsaturated fatty acid ester contained in an ink is polymerized through oxidative polymerization to increase its molecular weight, whereby the hardness of the image increases. Further, a resin is contained in the ink and thereby, image hardness before the oxidative polymerization increases, rendering it feasible to enhance the hardness of an image hardened by the oxidative polymerization to a level ofbeing sufficient as a printing matter.

Furthermore, the ink of the invention contains a gelling agent and a resin in the ink. Specifically, the content of a gelling agent is within a range of 0.5 to 20.0% by mass. A gelling agent content of 0.5 to 20.0% by mass forms a gelling state having a hardness of such an extent of inhibiting permeation of an ink into plain paper. Thereafter, an unsaturated fatty acid ester polymerizes over a period of few hours to few days to form a polymer, whereby a scratch-resistant image film is formed. Thus, it is assumed that a gel state with a moderate hardness is formed and thereafter, its hardness increases over a period of a few hours to a few days, whereby a time for leveling on the image surface is yielded to attain excellent texture of an image.

On the other hand, a so-called hot-melt ink contains large amounts of a wax and a resin component which function as a gelling agent in the present invention, is a solid ink exhibiting a hardness at room temperature and an ink recorded on paper exhibits a certain extent of abrasion resistance immediately after being printed. However, in such a hot-melt ink, its viscosity rapidly increases on paper, so that ink dots ejected onto paper do not enough time to be leveled, forming irregular texture. To form a uniform texture, it is necessary to subject the surface to a heating/pressure treatment after being recorded; however, even when subjected to a heating/pressure treatment, a wax-like unique texture is formed by the effect of a large amount of wax components.

In the following, there will be detailed the present invention and its constituents, and embodiments of the invention.
Compound capable of allowing Ink Composition to reversibly gel:
In the invention, a compound capable of allowing the ink composition of the invention to reversibly gel (which is hereinafter also denoted as a gelling agent) is added, whereby an ink gels by employing phase transition of the ink with temperature before the ink excessively permeates on plain paper. It is assumed that the gel structure forms a polymeric network through hydrogen bonding and intermolecular interaction, while containing the ink composition.

Such a compound capable of allowing the ink composition to reversible gel is added to an ink preferably in an amount of 0.5 to 20.0% by mass. An amount of not less than 0.5% by mass is preferable in terms of prevention of occurrence of blotch and text quality. Texture of a printed image is excellent at an amount of not more than 20.0% by mass, which is preferable in terms of prevention of a rise of phase transition temperature, prevention of load onto a printer and inhibition of ejection trouble, caused by polymerization reaction on the nozzle surface.

In the invention, gel refers to a lamella structure, a covalently bonded or hydrogen-bonded polymer network, a polymer network formed through physical coagulation, or a state having a structure in which solutes lose independent movement property through interaction of a coagulation structure pf particles and have an aggregated structure and are solidified or semi-solidified along with the rapid increase of viscosity or the marked increase of elasticity.

In general, gels include a thermally reversible gel capable of forming a fluid solution (also called sol) on heating and returning to an original gel on cooling, and a thermally irreversible gel which does not return to solution even by heating once it gels. A gel formed by a gelling agent, related to the invention is a thermally reversible gel.

The ink of the invention preferably exhibits a sol-gel phase transition temperature (hereinafter, also denoted as a phase transition temperature) of not less than 40 °C and not more than 80 °C, and more preferably, not less than 45 °C and not more than 70 °C. When the phase transition temperature of the ink is not less than 40 °C, stable ejection capability can stably be achieved without being affected by a printing environment temperature; when the phase transition temperature is not more than 80 °C, it is not necessary to heat an inkjet recording apparatus to an excessively high temperature, rendering it feasible to reduce a load onto a head or an ink supplying member of the inkjet recording apparatus.

To realize the phase transition temperature of an ink, as defined above, the melting temperature of a gelling agent is preferably from 20 to 250 °C, and more preferably from 40 to 90 °C. The phase transition temperature of an ink refers to a temperature at which the viscosity rapidly varies from a fluid solution state to a gel state and is synonymous for a gel transition temperature, a gel solution temperature, gel softening temperature, sol-gel transition temperature or gelling point

Examples of a measurement method of a phase transition temperature of the ink of the invention include a method wherein a small iron piece sealed in a glass tube is placed in a dilatometer and the temperature is varied, and a temperature at which the iron piece does not naturally fall is defined as a phase transition temperature [as described in J. Polym. Sci., 21, 57 (1956)] and a method in which an aluminum cylinder is placed on an ink and, when varying a gel temperature, a temperature at which the aluminum cylinder naturally falls is defined as a relative transition temperature [as described in Journa of Nippon Rheology Gakkai, Vol. 17, 86 (1989)]. Further, a simple method is also cited, in which a test piece of a gel is placed on a heat plate and the heat plate is heated, and a temperature at which the shape of the test piece collapses is measured, which is defined as a phase transition temperature of an ink. In the present invention, such a measurement method on a heat plate was employed.

The gelling agent of the invention may be a high molecular weight compound or a low molecular weight compound, and a low molecular weight compound is preferable for use in an ink. The expression, low molecular weight represents a molecular weight of 200 to 2000. Specific examples of such a low molecular weight compound include 12-hydroxystearic acid, (behenic acid/eicosanic diacid) glyceryl, stearic acid inulin, stearic acid amide, N-lauroyl-L-glutamic acid-α,γ-dibutylamide, stearone and cinnamic acid anhydride.

The ink of the invention which contains the foregoing gelling agent preferably exhibits a viscosity of 1 to 10 mPa·s at a temperature of a phase transition temperature of the ink plus 5 °C. When the viscosity of an ink falls within a range of 1 to 10 mPa at a temperature of a phase transition temperature of the ink plus 5 °C, a stable ejection characteristic can be achieved. Unsaturated Fatty Acid Ester:
An unsaturated fatty acid ester of the invention is capable of polymerize through chain reaction in which its unsaturated bond acts with an aerial oxygen molecule to form a radical. The use of such an oxidative polymerization method makes it feasible to design a compact printer which does not require any special light source or drying device.

The higher its iodine value is, the more reactive an unsaturated fatty acid ester becomes. In the case of an inkjet recording method, excessively high reactivity causes a polymerization reaction on the surface of an ejection nozzle, leading to ejection trouble which may become a fatal defect for an inkjet recording system. Accordingly, an unsaturated fatty acid related to the invention preferably is one which exhibits an iodine value of 130 to 200. Further, it is also preferable to use an unsaturated fatty acid ester which has been subjected to deaeration to reduce an oxygen content as low as possible.

The iodine value defined in the invention is a numerical value in which an amount of a halogen absorbed when an unsaturated fatty acid is reacted with such a halogen is represented by equivalent converted to iodine in terms of percentage, based on unsaturated fatty acid ester. Specifically, it is determined by a Wijs method using iodine monochloride as a reagent In the invention, the iodine value is one which is determined by potentiometric titration, based on JIS K 0070.

Specific examples of an unsaturated fatty acid ester of the invention include a vegetable oil and fat such as perilla oil, linseed oil, palm oil, soybean oil, sunflower oil, tsubaki oil, olive oil, or caster oil; and a fatty acid ester obtained by subjecting the vegetable oil and fat to ester interchange, together with an appropriate alcohol, such as ethyl, propyl, butyl, hexyl, 2-ethylhexyl, heptyl, octyl, nonyl, decyl or undecyl ester of perilla oil fatty acid, linsed oil fatty acid, palm oil fatty acid, soyben oil fatty acid, sunflower oil fatty acid, tsubaki oil fatty acid, olive oil fatty acid, caster oil fatty acid, palm oil fatty acid, rape oil fatty acid, or coconut fatty acid.

An addition amount of unsaturated fatty acid ester to an ink is preferably not less than 40% by mass in terms of fixability and not more than 90% by mass in terms of ejection stability. Metal Soap:
A metal soap maybe contained in the ink of the invention.

A metal soap related to the invention is added as a reaction catalyst which promotes oxidative polymerization of an unsaturated fatty acid ester and also accelerates polymerization of an ejected ink to harden and fix an ink image. Such addition makes it feasible to achieve a reaction rate enough to bear an actual machine.

Specific examples of a metal soap usable in the invention include manganese naphthenate (naphthenic acid Mn), cobalt naphthenate (naphthenic acid Co), manganese octylate (octylic acid Mn) and cobalt octylate (octylic acid Co).

An addition amount of a metal soap to an ink is preferably not less than 0.2% by mass and in terms of fixability and not more than 3% by mass in terms of ejection stability. Resin:
The ink of the invention contains a resin. Enhanced fixability can be achieved by containing such a resin.

Examples of the resin usable in the invention include an acryl resin, urethane resin, cellulose resin, rosin resin (rosin ester resin, rosin-modified alkyd resin, rosin-modified phenol resin petroleum resin), coumarone resin, amide resin, hydrocarbon resin, alkyd resin and terpene resin. Of these, a rosin resin and terpene resin are preferable.

Specific examples of a rosin resin include HARIPHENOL Series, made by Sanyo Kasei Co., Ltd. (rosin-modified phenol resin), HARIMAX Series, made by Sanyo Kasei Co., Ltd. (rosin-modified maleic acid resin), TAMANOL Series (rosin-modified phenol resin), made by Arakawa Chemical Industries Ltd. and MALKYD series (rosin-modified maleic acid resin), made by Arakawa Chemical Industries Ltd.

Specific examples of a terpene resin include YS resin series (terpene resin) and Clearon series (hydrogenated terpene resin), made by Yasuhara Chemical Co. Ltd.

Further, it is preferable to use a rosin resin and a terpene resin in their combination.

A resin is added preferably in an amount of not less than 10% by mass, based on ink and not more than 39% by mass in terms of ejection property and fixability. A weight average molecular weight of a resin is preferably within a range of 1000 to 50000. In the system of the invention, a relatively high molecular weight resin may be added for the purpose of heating at the time of ejection.

In the invention, it is preferable to form an inkjet image by using the ink of the invention, while maintaining an ink within a recording head at a temperature higher than that of a recording medium. Thereby, the ink ejected onto the recording medium is allowed to gel through lowering of temperature, rendering it feasible to perform effective fixation of the ink. The difference between temperature within a recording head and that of a recording medium is preferably not less than 10 °C.

There are a method in which a head, an ink tank and an ink passage used for inkjet recording are heated to a prescribed temperature, an ink is ejected on a recording medium and fixed with temperature lowering; and a method in which an ink is ejected on a portion which was previously cooled or blown with cold air, and fixed with temperature lowering. Of these, a method in which a head, an ink tank and an ink passage are heated to a prescribed temperature, is simple and preferable.

It is preferable to eject an ink while heating a recording head and the ink to a temperature of 35 to 120 °C and preferably, 60 to 100 °C. The ink of the invention is large in fluctuation range of viscosity with temperature variation and such viscosity fluctuation directly affects a droplet size and a droplet ejection rate, leading to deterioration of image quality, so that it is preferable to eject an ink, while heating the ink and maintaining it at a prescribed temperature. The range of such a prescribed temperature is preferably within a range of a set temperature ± 5 °C, more preferably, a set temperature ± 2 °C, and still more preferably a set temperature ± 1 °C. Herein, the set temperature refers to a standard temperature which is set as a temperature of an ink at the time when ejecting the ink. Constituents for Ink:
Next, there will be described the ink of the invention, specifically with respect to constituent except the foregoing ones.

### Coloring Material:

The ink of the invention may use dyes or pigments as a coloring material constituting the ink, without any restriction. It is preferable to use pigments which exhibit superior dispersion stability for ink components and excellent in weather resistance. Such pigments are not specifically restricted, but there are usable, in the invention, organic or inorganic pigments described in Color Index, as below.

Examples of a red or magenta pigment include Pigment Red 3, 5,19, 22, 31, 38, 43, 48:1, 48:2, 48:3, 48:4, 48:5, 49:1, 53:1, 57:1, 57:2, 58:4, 63:1, 81, 81:1, 81:2, 81:3, 81:4, 88, 104, 108, 112, 122, 123, 144, 146, 149, 166, 168, 169, 170, 177, 178, 179, 184, 185, 208, 216, 226, 257; Pigment Violet 3,19, 23, 29, 30, 37, 50, 88; Pigment Orange 13, 16,20 and 36.

Examples of a blue or cyan pigment include Pigment Blue 1, 15, 15:1, 15-2, 15:3, 15:4 15:6, 16, 17-1, 22, 27, 28, 29, 36 and 60.

Examples of a green pigment include Pigment Green 7,26,36, and 50.

Examples of a yellow pigment include Pigment Yellow 1, 3, 12, 13, 14, 17, 34, 35, 37, 55, 74, 81, 83, 93; 94, 95, 97, 108, 109, 110, 137, 138, 139, 153, 154, 155, 157, 166, 167, 168, 180, 185, and 193.

Examples of a black pigment include Pigment Black 7,28, and 26. These pigments are usable in accordance with the object.

Specific examples of commercially available pigments include CHROMOFINE YELLOW 2080; 5900, and 5930, AF-1300, 2700L; CHROMOFINE ORANGE 3700L and 6730, CHROMOFINE SCARLET 6750, CHROMOFINE MAGENTA 6880, 6886, 6891N, 6790, and 6887, CHOMOFINE RED 6820, and 6830, CHROMOFINE BLUE HS-3, 5187, 5108, 5197, 5085N, SR-5020, 5026, 5050, 4920, 4927, 4937, 4824, 4933GN-EP, 4940, 4973, 5205, 5208, 5214, 5221, AND 5000P, CHROMOFINE GREEN 2GN, 2GO, 2G-550D, 5310,5370, and 6830; CHROMOFINE BLACK A-1103; SEIKA FAST YELLO 10GH, A-3,2035,2054,2200,2270,2300,2400 (B), 2500, 2600, ZAY-260, 2700(B), 2770; SEIKA FAST RED 8040, C405(F), CA120, LR-116, 1531B, 8060R, 1547, ZAW-262, 1537B, GY, 4R-4016, 3820, 3891, ZA-215; SEIKA FAST CARMINE 6B147,6T-7, 1483LT, 3840, and 3870; SEIKA FAST BORDEAUX 10B-430; SEIKA LIGHT ROSE R40; SEIKA LIGHT VIOLET B800, AND7805; SEIKA FAST MAROON 460N; SEIKA FAST ORANGE 900 AND 2900; SEIKA LIGHT BLUE C718, and A612; CYANINE BLUE 4933M 4933GN-EP, 4940, and 4973 (which are products by Dainichi Seika Kogyo Co., Ltd.); KET Yellow 401, 402, 403, 404, 405, 406, 416, 424; KET Orange 501, KET Red 301, 302, 303, 304, 305, 306, 307, 308, 309, 310, 336, 337, 338 and 346, KET Blue 101, 102, 103, 104, 105, 106, 111, 118, and 124; KET Green 201 (which are products by DIC); Colortex Yellow 301, 314, 315, and 316, P-624,314, U10GN, U3GN, UNN, UA-414, U263, Finecol Yellow T-13, T-05, Pigment Yellow 1705, Colortex Orange 202, Colortex Red 101, 103, 115, 116, D3B, P-625, 102, H-1024, 105C, UFN, UCN, UBN, U3BN, URN, UGN, UG276, U456, U457, 105C, USN, Colortex Maroon 601, Colortex Brown B610N, Colortex Violet 600, Pigment Red 122, Colortex Blue 516, 517, 518, 519, A818, P-908, 510, Colortex Green 402, 403, Colortex Black 702, and U905 (which are products by Sanyou Shikiso Co., Ltd.); Lionol Yellow 1405G, Lionol Blue FG7330, FG7350, FG7400G, FG7405G, ES, ESP-S (which are products by Toyo Ink Co., Ltd); Toner Magenta E02, Pennanent Rubin F6B, Toner Yellow HG, PermanentYellow GG-02, Hostapean Blie B2G (which are products by Hoechst Industry Co.); Novoperm P-HG, Hostapenn Pink E, Hostaperm Blue B2G (which are products by Clariant Co.); Carbon Black #2600, #2400, #2350, #2200, #1000, #990, #980, #970, #960, #950, #850, MCF88, #750, #650, MA600, MA7, MA8, MA11, MA100, MA100R, MA77, #52, #50, #47, #45, #45L, #40, #33, #32, #30, #25, #20, #10, #5, #44, and CF9 (which are products by Mitsubishi Kagaku Co., Ltd.).

The foregoing pigments can be dispersed using, for example, a ball mill, sand mill, atreiter, roll mill, agitator, Henschel mixer, colloid mill, ultrasonic homogenizer, pearl mill, wet jet mixer or paint shaker.

There may be added a dispersant when dispersing a pigment Such a dispersant preferably is a polymeric dispersant and examples of a polymeric dispersant include Solsperse series, available from Avecia Co and PB series available from Ajinomoto Fine Techno Co., Ltd. There are further cited materials, as described below.

Examples of dispersants for pigments (hereinafter, also denoted as pigment dispersants) include a hydroxyl-containing carboxylic acid ester, a alt of a long chain polyaminoamide and a high-molecular acid ester, a high-molecular polycarboxylic acid salt, a salt of a long chain polyaminoamide and a polar acid ester, a high-molecular unsaturated acid ester, high-molecular copolymer, a modified polyurethane, a modified polyacrylate, a polyether ester type anionic surfactant, a naphthalene sulfonic acid formalin condensation product, a polyoxyethylene alkylphosphoric acid ester, a polyoxyethylene nonylphenyl ether, stearylamine acetate, and pigment derivatives.

Specific examples thereof include Anti-Terra-U (polyaminoamide phosphate), Anti-Terra-203/204 (high-molecular polycarboxylic acid salt), Disperbyk-101 (polyaminoamide phosphate and acid ester), 107 (hydroxyl-containing carboxylic acid ester), 110 (acid group-containing copolymer), 130 (poltamide), 161, 162, 163, 164, 165, 166, 170 (high-molecular copolymer), 400, Bykumen (high-molecular unsaturated acid ester), BYK-P104, P105 (high-molecular unsaturated polycarboxylic acid), P104S, 240S (high-molecular unsaturated polycarboxylic acid and silicone) and Lactimon (long-chain amine, unsaturated acid polycarboxylic acid and silicone), which are products by BYK Chemie Co.

There are also cited Efka 44, 46, 47, 48, 49, 54, 63, 64, 65, 66, 71, 701, 764 and 766; Efka Polymer 100 (modified polyacrylate), 150 (aliphatic modified polymer), 400, 401, 402, 403, 450, 451, 452 and 453 (modified polyacrylate), 745 (copper phthalocyanine), which are products by Efka CHEMICAL Co.; FLORENT TG-710 (urethane oligomer), FLONONE SH-290, SP-1000, POLYFLOW No. 50E, No. 300 (acrylic copolymer), which are products by Kyoei Kagaku Co., Ltd.; Disperon KS-860, 873SN, 874 (polymeric dispersants), #2150 (aliphatic polycarboxylic acid), #7004 (polyetyer ester type), which are products by Kusumoto Kasei Co., Ltd.

There are also cited DEMOL RN, N (sodium salt of naphthalenesulfonic acid formalin condensation product sodium salt), MS, C, SN-B (aromatic sulfonic acid formalin condensation product sodium salt), EP, HOMOGENOL L-18 (polycarboxylic acid type polymer), EMULGEN 920,930, 931, 935, 950, 985 (polyoxyethylene nonylphenyl ether), ACETAMIN 24 (coconut amine acetate), 86 (stearylamine acetate), which are products by Kusumoto Kasei Co., Ltd); Solspers 5000 (phthalocyanine ammonium salt), 13240,13940 (polyesteramine type), 17000 (carboxylic acid amine type), 24000, 32000, which are products by Zeneca Co.; NIKKOL T106 (polyoxyethylene sorbitan monooleate), MYS-IEX (polyoxyethylene monostearate), Hexagline 4-0 (hexaglyceryl tetraoleate), which are products by Nikko Chemical Co., Ltd.

Such a pigment dispersant is contained in an ink preferably in an amount of 0.1 to 20% by mass. Further, synergists may be used as dispersing auxiliaries in accordance with various pigments. Such a dispersant or dispersing auxiliary is added preferably in amount of 1 to 50 parts by mass per 100 parts by mass of a pigment. A dispersing medium may employ a polymeric compound or a solvent.

In a pigment dispersion, the average particle size of pigment particles is preferably within a range of 0.08 to 0.5 µm, and selection of a pigment, a dispersant or a dispersing medium, or setting of a dispersing condition or filtration condition so that the maximum particle size falls within a range of 0.3 to 10 µm, and preferably 0.3 to 3 µm. Such particle size control renders it feasible to inhibit clogging of a head nozzle and to maintain storage stability of an ink, and transparency and hardening sensitivity.

Conventionally known dyes or preferably, oil-soluble dyes can optionally be used in the ink of the invention. Examples of oil-soluble dyes usable in the invention are shown below, but the invention is not limited to these:

### Magenta Dye:

MS Magenta VP and MS, MS Magenta HM-1450, MS Magenta HSo-147 (which are products by Mitsui Toatsu Co., Ltd.); AIZENSOT Red-1, AIZEN SOT Red-2, AIZEN SOT Red-3, AIZEN SOT Pink-1, SPIRON Red GEH SPRCIAL (which are products by Hodogaya Kagaku Co., Ltd.); RESOLIN Red FB 200%, MACROLEX Red Violet R, MACROLEX ROT 5B (which are products by Bayer Co. Japan); KAYASET Red, KAYASET Red 130, KAYASET Red 802 (which are products by Nippon Kayaku Co., Ltd.); PHLOXIN, ROSE BENGAL, and ACID Red (which are products by Daiwa Kasei Co., Ltd.); HSR-31, and DIARESIN Red K (which are products by Mitsubishi Kasei Co., Ltd.); and Oil Red (which is a product by BASF Japan Co.).

### Cyan Dye:

MS Cyan HM-1238, MS Cyan HSo-16, Cyan HSo-144, MS Cyan VPG (which are products by Mitsui Toatsu Co., Ltd.); AIZEN SOT Blue-4 (which is a product by Hodogaya Kagaku Co., Ltd.); RESOLIN BR. Blue BGLN 200%, MACROLEX Blue RR, CERES Blue GN, SIRIUS SUPRATURQ. Blue Z-BGL. SIRIUS SUPER Blue FB-LL 330% (which are products by Bayer Co. Japan); KAYASET Blue FR, KAYASET Blue N, KAYASET Blue 814, Turq. Blue GL-5 200, Light Blue BGL-5 200 (which are products by Nippon Kayaku Co., Ltd.); DAIWA Blue 7000, Oleosol Fast Blue GL (which are products by Daiwa Kasei Co., Ltd.); DIARESIN Blue P (which is a product by Mitsubishi Kasei Co., Ltd.); SUDAN Blue 670, NEOPEN Blue 808, and ZAPON Blue 806 (which are products by BASF Japan Co.).

### Yellow Dye:

MS Yellow HSm-41, Yellow KX-7, Yellow EX-27 (which are products by Mitsui Toatsu Co., Ltd.); AIZEN SOT Yellow-1, AIZEN SOT Yellow-3, AIZEN SOT Yellow-6 (which are products by Hodogaya Kagaku Co., Ltd.); MACROLEX Yellow 6G, MACROLEX FLUOR. Yellow 10GN (which are products by Bayer Co. Japan); KAYASET Yellow SF-G, KAYASET Yellow 2G, KAYASET Yellow A-G, KAYASET Yellow E-G (which are products by Nippon Kayaku Co., Ltd.); DAIWA Yellow 330 HB (which is a product by Daiwa Kasei Co., Ltd.); HSY-68 (which is a product by Mitsubishi Kasei Co., Ltd.); SUDAN Yellow 146, and NEOPEN Yellow 075 (which are products by BASF Japan Co.).

### Black Dye:

MS Black VPC (which is a product by Mitsui Toatsu Co., Ltd.); AIZEN SOT Black-1, AIZEN SOT Black-5 (which are products by Hodogaya Kagaku Co., Ltd.); RESORIN Black GSN 200%, RESOLIN Black BS (which are products by Bayer Co. Japan); KAYASET Black A-N (which is a product by Nippon Kayaku Co., Ltd.); DAIWA Black MSC (which is a product by Daiwa Kasei Co., Ltd.); HSB-202 (which is a product by Mitsubishi Kasei Co., Ltd.); NEPTUNE black X60, and NEOPEN black X58 (which are products by BASF Japan Co.).

A pigment or an oil-soluble dye is added preferably in an amount of 0.1 to 20% by mass, and more preferably, 0.4 to 10% by mass. An amount of not less than 0.1 % by mass can obtain superior image quality and an amount of not more than 20% by mass can achieve an appropriate ink viscosity at the time when ejecting an ink. Further, there may be used a mixture of two or more coloring materials to control color.

### Other Additives:

In addition to the foregoing additives, the ink of the invention may employ commonly known additives in response to enhancements of various performances, such as ejection stability, adaptability to a print head or an ink cartridge, storage stability, image lasting quality, or the like. Examples thereof include a viscosity controlling agent, a specific resistance controlling agent, a film-forming agent, a UV absorber, an anti-discoloring agent, an anti-fungal agent, and a rust-proofing agent

Specifically, it is preferred to add an antioxidant to inhibit oxidation polymerization near a nozzle. Examples of such an antioxidant include an alkylphenol compound, an amine compound such as phenylenediamine, a hindered phenol compound, a hydroquinone compound and a hydroxylamine compound

In the invention, it is preferred to perform image formation, while maintaining the difference in temperature between an ink within a recording head and a recording medium, and thereby, the ink ejected on the recording medium is settled through viscosity increasing or gelation and then fixed through oxidation polymerization of an unsaturated carboxylic acid ester.

### EXAMPLES

In the following, the present invention will be described in detail with reference to examples, but the invention is by no means limited to these. Unless otherwise noted, "part(s)" or "%" represents parts by mass or % by mass.

### Preparation of Ink:

### Preparation of Ink 1:

In 67.5 parts by mass of linseed oil was dissolved 2 parts by mass of Solsperse 28000 (produced by Lubrizol Co.), and further, 5 parts by mass of carbon black MA7 (produced by Mitsubishi Kagaku Co.) was added thereto and mixed. Thereafter, the mixture was dispersed by using a beads mill over 20 minutes to obtain an ink.

Further, 20 parts by mass of rosin-modified phenol resin (TAMANOL 361, molecular weight of 36000, produced by Arakawa Chemical Industries., Ltd.) was added thereto and stirred, and 5 parts by mass of a gelling agent, 12-hydroxystearic acid was added and stirred at 90 °C over 20 minutes. Further thereto, 0.5 parts by mass of manganese naphthenate was added and stirred to obtain ink 1 (invention).

### Preparation of Inks 2 to 26:

Inks 2 to 28 were obtained in the same manner as the foregoing ink 1, except that an unsaturated carboxylic acid ester, a metal soap, a gelling agent, a resin, a colorant and a dispersant, as shown in Tables 1 to 3, were used, wherein Inks 1 to 13,17,18,21 and 24 correspond to those of the invention and Inks 14 to 16,19,20,22,23,25 and 26 correspond to those of comparison.

### Preparation of Inks 27 to 50:

Inks 27 to 50 were obtained in the same manner as the foregoing ink 1, except that an unsaturated carboxylic acid ester, a saturated carboxylic acid, a metal soap, a gelling agent, a resin, a colorant and a dispersant, as shown in Tables 1 to 3, were used, wherein Inks 28 to 33 correspond to those of the invention and Inks 27, and 34 to 50 correspond to those of comparison.

### Evaluation Method:

### Formation of Inkjet Image:

An inkjet recording apparatus provided with a piezo-type inkjet nozzle was loaded with each of inks prepared above, and an outline character and a solid image were printed on PPC paper (J PAPER, product by Konica Minolta Business Solutions Inc.).

An ink supply system is constituted of an ink tank, a feed pipe, an anterior chamber immediately anterior to a recording head, a pipeline provided with a filter and a piezo head, and the portion of from the anterior room to the recording head was thermally insulated and heated to a temperature of the gel transition temperature of an ink plus 30 C. A piezo head and a heater were internally built, and an ink within a recording head was heated to a temperature of a gel transition temperature plus 30 °C. An ink which did not cause gelation was heated equally to 70 °C.

The piezo head in which a nozzle diameter was 20 µm, the number of nozzles is 512 nozzles (256 nozzles x 2 lines, staggered arrangement, and the nozzle pitch of a single line being 360 dpi and "dpi" is the number of dots per inch or 2.54 cm) ejected ink droplets at a droplet speed of 6 m/sec so as to form a droplet of 2.5 pl and printed at a recording resolution of 1440 dpi x 1440 dpi. Text Quality:
Using each of the foregoing inks, outline characters of Chinese characters " 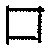 , 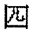 , 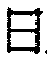 , 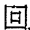 , 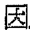 , 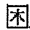 , 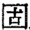 , 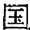 , 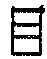 , 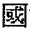 " in a Ming-style of three-, four- and five-points were printed on PPC paper (J PAPER, product by Konica Minolta Business Solutions Inc.) at resolution of 1400 dpi x 1440 dpi. The thus printed character images were visually observed and evaluated with respect to text quality based on the following criteria:
   A: All of outline characters of tree-point were clearly printed to details,
   B: Only a part of outline characters of tree-point was legible but all of outline characters of four-point were legible,
   C: Only a part of outline characters of four-point was legible.

### Fixability:

After samples which were prepared by printing a solid image on PPC paper (J PAPER, product by Konica Minolta Business Solutions Inc.) with each of the foregoing inks, were naturally dried over a whole day and night under an environment of 40 °C and 60% RH, a sheet of unprinted PPC paper was put on the printed portion of each of the samples and a load of 100 g/cm² was applied thereto and was allowed to shuttle ten times. Thereafter, samples and paper rubbed while being faced to each of the samples were visually observed and evaluated with respect to fixability, based on the following criteria:
A: No change was observed on the printed surface and no ink adhered onto the rubbed paper,
B: The printed surface flawed but no ink adhered onto the rubbed paper,
C: An ink on the printed surface was partially lost and slightly adhered on the paper surface,
D: An ink on the printed surface was markedly lost and an image was disordered, and a large amount of ink adhered onto the rubbed surface.

### Continuous Ejection Stability:

Using a piezo type inkjet head, continuous ejection was conducted over one hour under the condition of a single droplet of 2.5 pl and a droplet rate or 6 m/sec, while heating an ink supply system and a piezo head at a temperature of the gel transition temperature of an ink plus 30 °C, and the number of nozzles ejecting ink droplets was observed by a microscope.

The proportion of ejecting nozzles in percentage of (number of nozzles minus number of nozzles which caused deficiency or bending at the time when one hour elapsed after starting continuous ejection)/(number of nozzles) was determined and continuous ejection stability was evaluated based on the following criteria.

There was used a piezo head in which a nozzle diameter was 20 µm and the number of nozzles was 512 [that is, (256 nozzles) x (2 lines), staggered arrangement, the nozzle pitch of a single line being 360 dpi].
A: Proportion of ejecting nozzles being not less than 85% and not more than 100%,
B: Proportion of ejecting nozzles being not less than 70% and less than 85%,
C: Proportion of ejecting nozzles being less than 70%.

### Evaluation of Texture:

Using each of the foregoing inks, a solid image was printed on PPC paper (J PAPER, product by Konica Minolta Business Solutions Inc.) to prepare a sample, which was evaluated with respect to texture of the image, based on the following criteria:
A: Homogeneous texture,
C: Incompatibility being felt in irregularity or light reflection on the surface.

Evaluation results are shown in Tables 1 to 6.

**Table 1**

| | | Ink 1 (Inv.) | Ink 2 (Inv.) | Ink 3 (Inv.) | Ink 4 (Inv.) | Ink 5 (Inv.) | Ink 6 (Inv.) | Ink 7 (Inv.) | Ink 8 (Inv.) | Ink 9 (Inv.) |
|---|---|---|---|---|---|---|---|---|---|---|
| Unsaturated Fatty Acid Ester (iodine value) | perilla oil (210) | | | | | | | | | |
| | linseed oil (180) | 67.5 | 67.5 | 77 | 77.5 | 57 | 57.5 | | | |
| | soybean oil (130) | | | | | | | 67.5 | 67.5 | 72 |
| | sunflower oil (120) | | | | | | | | | |
| Metal Soap | naphthenic acid Mn | 0.5 | 0.5 | 1 | 0.5 | | | 0.5 | 0.5 | 1 |
| | naphthenic acid Co | | | | | 1 | 0.5 | | | |
| Gelling Agent | 12-hydroxystearic acid | 5 | 5 | | | | | 5 | 5 | |
| | stearic acid inulin | | | 5 | 5 | | | | | 10 |
| | stearic acid amide | | | | | 5 | 5 | | | |
| Resin (molecular weight) | TAMANOL 361 (36000) | 20 | | 10 | | 30 | | 20 | | 10 |
| | Polymide S40E (50000) | | 20 | | 10 | | 30 | | 20 | |
| | KG2212 (133000) | | | | | | | | | |
| | Cumarone G-100N (730) | | | | | | | | | |
| Coloring Material | carbon black MA 7 | 5 | 5 | 5 | 5 | 5 | 5 | 5 | 5 | 5 |
| Dispersant | Solspers 28000 | 2 | 2 | 2 | 2 | 2 | 2 | 2 | 2 | 2 |
| Evaluation Result | Text Quality | A | A | A | A | A | A | A | A | A |
| | Fixability | A | A | A | A | A | A | A | A | A |
| | Continuous Ejection Stability | A | A | A | A | A | A | A | A | A |
| | Texture | A | A | A | A | A | A | A | A | A |

| | | | | | | | | | | |
|---|---|---|---|---|---|---|---|---|---|---|
| Metal Soap: naphthenic acid Mn: manganese naphthenate naphthenic acid Co: cobalt naphthenate Resin: TAMANOL 361 (36000): TAMANOL 361 (rosin-modified phenol resin, made by Arakawa Chemical Industries Ltd., molecular weight of 36000), Polymide S40E (50000): Polymide S40E (polyamide resin, made by Sanyo Kasei Co., Ltd., molecular weight of 50000), KG 2212 (133000): KG 2212 (rosin-modified phenol resin, made by Arakawa Chemical Industries Ltd., molecular weight of 133000), Coumarone G 100N (730): Coumarone G 100N (coumarone resin, made by Nitto Kagaku Co., Ltd., molecular weight of 730), Color material: Carbon Black MA7: Carbon Black MA7 (made by Mitsubishi Kagaku Co., Ltd.), Dispersant: Solspers 28000: Solspers 28000 (made by Lubrizol Corp.) | | | | | | | | | | |

**Table 2**

| | | Ink 10 (Inv.) | Ink 11 (Inv.) | Ink 12 (Inv.) | Ink 13 (Inv.) | Ink 14 (Comp.) | Ink 15 (Comp.) | Ink 16 (Comp.) | Ink 17 (Inv.) |
|---|---|---|---|---|---|---|---|---|---|
| Unsaturated Fatty Acid Ester (iodine value) | perilla oil (210) | | | | | | | | 67.5 |
| | linseed oil (180) | | | | 72.3 | | 61.7 | 61.5 | |
| | soybean oil (130) | 62.5 | 57 | 61.8 | | 50.5 | | | |
| | sunflower oil (120) | | | | | | | | |
| Metal Soap | naphthenic acid Mn | 0.5 | | | 0.5 | 0.5 | 1 | 0.5 | 0.5 |
| | naphthenic acid Co | | 1 | 0.5 | | | | | |
| Gelling Agent | 12-hydroxystearic acid | | | | 0.2 | | | | 5 |
| | stearic acid inulin | 20 | | | | 22 | 0.3 | | |
| | stearic acid amide | | 5 | 0.7 | | | | 21 | |
| Resin (molecular weight) | TAMANOL 361 (36000) | | 30 | | | 20 | 30 | | 20 |
| | Polymide S40E (50000) | 10 | | 30 | 20 | | | 10 | |
| | KG2212 (133000) | | | | | | | | |
| | Cumarone G-100N (730) | | | | | | | | |
| Color Material | carbon black MA 7 | 5 | 5 | 5 | 5 | 5 | 5 | 5 | 5 |
| Dispersant | Solspers 28000 | 2 | 2 | 2 | 2 | 2 | 2 | 2 | 2 |
| Evaluation Result | Text Quality | A | A | A | B | A | B | A | A |
| | Fixability | A | A | A | A | A | A | A | A |
| | Continuous Ejection Stability | A | A | A | A | B | A | B | B |
| | Texture | A | A | A | A | A | A | A | A |

**Table 3**

| | | Ink 18 (Inv.) | Ink 19 (Comp.) | Ink 20 (Comp.) | Ink 21 (Inv.) | Ink 22 (Comp.) | Ink 23 (Comp.) | Ink 24 (Inv.) | Ink 25 (Comp.) | Ink 26 (Comp.) |
|---|---|---|---|---|---|---|---|---|---|---|
| Unsaturated Fatty Acid Ester (iodine value) | perilla oil (210) | | | 61.7 | | | | | | 61.7 |
| | linseed oil (180) | | | | 67.5 | | | 67.5 | | |
| | soybean oil (130) | | | | | 60 | | | 60 | |
| | sunflower oil (120) | 67.5 | 60.5 | | | | 62 | | | |
| Metal Soap | naphthenic acid Mn | 0.5 | 0.5 | 1 | 0.5 | 1 | | | | 1 |
| | naphthenic acid Co | | | | | | 0.5 | 0.5 | 1 | |
| Gelling Agent | 12-hydroxystearic acid | 5 | | | 5 | | | 5 | | |
| | stearic acid inulin | | 22 | 0.3 | | 22 | | | 22 | |
| | stearic acid amide | | | | | | 0.3 | | | 0.3 |
| Resin (molecular weight) | TAMANOL 361 (36000) | | 10 | 30 | | | | | | |
| | Polymide S40E (50000) | 20 | | | | | | | | |
| | KG2212 (133000) | | | | 20 | 10 | 30 | | | |
| | Cumarone G-100N (730) | | | | | | | 20 | 10 | 30 |
| Color Material | carbon black MA 7 | 5 | 5 | 5 | 5 | 5 | 5 | 5 | 5 | 5 |
| Dispersant | Solspers 28000 | 2 | 2 | 2 | 2 | 2 | 2 | 2 | 2 | 2 |
| Evaluation Result | Text Quality | A | A | B | A | A | B | A | A | B |
| | Fixability | B | B | A | A | A | B | B | B | B |
| | Continuous Eiection Stability | A | B | B | B | B | B | A | B | A |
| | Texture | A | A | A | A | A | A | A | A | A |

**Table 4**

| | | Ink 27 (Comp.) | Ink 28 (Inv.) | Ink 29 (Inv.) | Ink 30 (Inv.) | Ink 31 (Inv.) | Ink 32 (Inv.) | Ink 33 (Inv.) | Ink 34 (Comp.) |
|---|---|---|---|---|---|---|---|---|---|
| Unsaturated Fatty Acid Ester (iodine value) | perilla oil (210) | | | | | | | | |
| | linseed oil (180) | | 68 | | 58 | | 75 | | 72.5 |
| | soybean oil (130) | | | 72.5 | | | | 85 | |
| | sunflower oil (120) | | | | | 82.5 | | | |
| Saturated Fatty Acid Ester | Exeparl MS | 67.5 | | | | | | | |
| Metal Soap | naphthenic acid Mn | 0.5 | | | | | | | 0.5 |
| | naphthenic acid Co | | | | | | | | |
| Gelling Agent | 12-hydroxystearic acid | 5 | 5 | | | | 5 | | |
| | stearic acid inulin | | | 7.5 | | 7.5 | | 5 | |
| | stearic acid amide | | | | 5 | | | | |
| Resin (molecular weight) | TAMANOL 361 (36000) | 20 | 20 | | 30 | | | | 20 |
| | Polymide S40E (50000) | | | 20 | | 10 | | | |
| | KG2212 (133000) | | | | | | 20 | | |
| | Cumarone G-100N (730) | | | | | | | 10 | |
| Color Material | carbon black MA 7 | 5 | 5 | | 5 | | | | 5 |
| Dispersant | Solspers 28000 | 2 | 2 | | 2 | | | | 2 |
| Evaluation Result | Text Quality | A | A | A | A | A | A | A | C |
| | Fixability | C | B | B | B | B | B | B | A |
| | Continuous Ejection Stability | A | A | A | A | A | B | A | A |
| | Texture | A | A | A | A | A | A | A | A |

| | | | | | | | | | |
|---|---|---|---|---|---|---|---|---|---|
| Saturated Fatty Acid Ester: EXCEPARL MS: EXCEPARL MS (methyl stearate, made by KAO Co., Ltd.) | | | | | | | | | |

**Table 5**

| | | Ink 35 (Comp.) | Ink 36 (Comp.) | Ink 37 (Comp.) | Ink 38 (Comp.) | Ink 39 (Comp.) | Ink 40 (Comp.) | Ink 41 (Comp.) | Ink 42 (Comp.) |
|---|---|---|---|---|---|---|---|---|---|
| Unsaturated Fatty Acid Ester (iodine value) | perilla oil (210) | | | 72.5 | | | | | |
| | linseed oil (180) | | 62.5 | | 82.5 | 72.5 | | 84 | |
| | soybean oil (130) | 82 | | | | | 87.5 | | |
| | sunflower oil (120) | | | | | | | | 79 |
| Saturated fatty acid ester | Exeparl Ms | | | | | | | | |
| Metal Soap | naphthenic acid Mn | | 0.5 | 0.5 | 0.5 | 0.5 | 0.5 | | |
| | naphthenic acid Co | 1 | | | | | | 1 | 1 |
| Gelling Agent | 12-hydroxystearic acid | | | | | | | 15 | |
| | stearic acid inulin | | | | | | | | 20 |
| | stearic acid amide | | | | | | 5 | | |
| Resin (molecular weight) | TAMANOL 361 (36000) | 10 | | 20 | | | | | |
| | Polymide S40E (50000) | | 30 | | | | | | |
| | KG2212 (133000) | | | | 10 | | | | |
| | Cumarone G-100N (730) | | | | | 20 | | | |
| Color Material | carbon black MA 7 | 5 | 5 | 5 | 5 | 5 | 5 | | |
| Dispersant | Solspers 28000 | 2 | 2 | 2 | 2 | 2 | 2 | | |
| Evaluation Result | Text Quality | C | C | C | C | C | A | A | A |
| | Fixability | A | A | A | A | B | D | D | D |
| | Continuous Ejection Stability | A | A | B | B | A | A | A | A |
| | Texture | A | C | A | A | A | A | A | A |

**Table 6**

| | | Ink 43 (Comp.) | Ink 44 (Comp.) | Ink 45 (Comp.) | Ink 46 (Comp.) | Ink 47 (Comp.) | Ink 48 (Comp.) | Ink 49 (Comp.) | Ink 50 (Comp.) |
|---|---|---|---|---|---|---|---|---|---|
| Unsaturated Fatty Acid Ester (iodine value) | perilla oil (210) | | | 56.5 | | | | | |
| | linseed oil (180) | 78 | | | | | | | 3 |
| | soybean oil (130) | | 55 | | 79.5 | 61.5 | 13 | 13 | |
| | sunflower oil (120) | | | | | | | | |
| Saturated fatty acid ester | Exeparl Ms | | | | | | | | |
| Metal Soap | naphthenic acid Mn | | | | | 0.5 | | | |
| | naphthenic acid Co | 0.5 | 0.5 | 0.5 | 1 | | | | |
| Gelling Agent | 12-hydroxystearic acid | | 5 | 5 | | | 40 | 20 | 50 |
| | stearic acid inulin | 7 | | | | 7 | | | 20 |
| | stearic acid amide | | | | 5 | | 20 | 50 | |
| Resin (molecular weight) | TAMANOL 361 (36000) | | 32.5 | 31 | | | 20 | | |
| | Polymide S40E (50000) | 7.5 | | | | | | 10 | |
| | KG2212 (133000) | | | | 7.5 | | | | 10 |
| | Cumarone G-100N (730) | | | | | 31 | | | 10 |
| Color Material | carbon black MA 7 | 5 | 5 | 5 | 5 | | 5 | 5 | 5 |
| Dispersant | Solspers 28000 | 2 | 2 | 2 | 2 | | 2 | 2 | 2 |
| Evaluation Result | Text Quality | A | A | A | A | A | B | B | B |
| | Fixability | C | A | A | C | C | B | B | B |
| | Continuous Ejection Stability | A | C | C | C | C | B | B | A |
| | Texture | A | C | C | A | - | C | C | C |

As apparent from Tables 1 to 6, it was proved that the ink of the invention was superior in continuous ejection stability and was also superior in text quality and fixability.

It was also proved that, according to the invention, there was provided an inkjet ink which was capable ofbeing ejected without necessity of heating an inkjet head to a relatively high temperature and curable for a short time to an extent of inhibiting print through, therefore had a light system load and was also superior in continuous ejection stability, high aptitude for plain paper and excellent in text quality and fixability.

## Claims

1. An inkjet ink comprising an unsaturated fatty acid ester, a pigment dispersed with a dispersant, a compound capable of allowing an ink composition to reversibly gel in an amount of 0.5 to 20% by mass, based on total mass of the ink, a resin for enhancing the fixability in an amount of 10 to 30% by mass, based on total mass of the ink, and a metal soap in an amount of 0.2 to 3% by mass, based on total mass of the ink.

2. The inkjet ink as claimed in claim 1, wherein the resin exhibits a weight average molecular weight of 1000 to 50000.

3. The inkjet ink as claimed in claim 1 or 2, wherein the unsaturated fatty acid ester exhibits an iodine value of 130 to 200.

4. The inkjet ink as claimed in any of claims 1 to 3, wherein the resin comprises a resin selected from a rosin resin or a terpene resin.

5. The inkjet ink as claimed in any of claims 1 to 4, wherein the resin comprises the rosin resin and the terpene resin.

6. The inkjet ink as claimed in any of claims 1 to 5, wherein the ink is cured by an oxidative polymerization.

7. The inkjet ink as claimed in any of claims 1 to 6, wherein the unsaturated fatty acid ester has been subjected to deaeration.

8. A method for forming an inkjet image by using an inkjet ink as claimed in any of claims 1 to 7, the method comprising:
ejecting the inkjet ink exhibiting a temperature higher than a temperature of a recording medium onto the recording medium to form an image.

## Patentansprüche

1. Tintenstrahltinte, umfassend einen ungesättigten Fettsäureester, ein in einem Dispergiermittel dispergiertes Pigment, eine Verbindung, welche es einer Tintenzusammensetzung ermöglicht, reversibel ein Gel zu bilden, in einer Menge von 0.5 bis 20 Masse%, bezogen auf das Gesamtgewicht der Tinte, ein Harz zur Verbesserung der Fixierbarkeit in einer Menge von 10 bis 30 Masse%, bezogen auf das Gesamtgewicht der Tinte, und eine Metallseife in einer Menge von 0.2 bis 3 Masse%, bezogen auf das Gesamtgewicht der Tinte.

2. Tintenstrahltinte nach Anspruch 1, wobei das Harz ein gewichtsmittleres Molekulargewicht von 1000 bis 50000 aufweist.

3. Tintenstrahltinte nach Anspruch 1 oder 2, wobei der ungesättigte Fettsäureester einen Iodwert von 130 bis 200 aufweist.

4. Tintenstrahltinte nach einem der Ansprüche 1 bis 3, wobei das Harz ein aus einem Kolophoniumharz oder einem Terpenharz ausgewähltes Harz umfasst.

5. Tintenstrahltinte nach einem der Ansprüche 1 bis 4, wobei das Harz das Kolophoniumharz und das Terpenharz umfasst.

6. Tintenstrahltinte nach einem der Ansprüche 1 bis 5, wobei die Tinte durch oxidative Polymerisation gehärtet wird.

7. Tintenstrahltinte nach einem der Ansprüche 1 bis 6, wobei der ungesättigte Fettsäureester einer Entlüftung unterzogen worden ist.

8. Verfahren zur Erzeugung eines Tintenstrahlbildes unter Verwendung einer Tintenstrahltinte nach einem der Ansprüche 1 bis 7, wobei das Verfahren umfasst:
Ausstoßen der Tintenstrahltinte mit einer über der Temperatur eines Aufzeichnungsmediums liegenden Temperatur auf das Aufzeichnungsmedium zur Erzeugung eines Bildes.

## Revendications

1. Encre pour jet d'encre comprenant un ester d'acide gras insaturé, un pigment dispersé avec un dispersant, un composé permettant à une composition d'encre de gélifier de façon réversible dans une quantité de 0,5 à 20 % en masse, sur la base de la masse totale de l'encre, une résine pour renforcer la capacité de fixage dans une quantité de 10 à 30 % en masse, sur la base de la masse totale de l'encre, et un savon métallique dans une quantité de 0,2 à 3 % en masse, sur la base de la masse totale de l'encre.

2. Encre pour jet d'encre selon la revendication 1, dans laquelle la résine affiche une masse moléculaire moyenne en masse de 1000 à 50 000.

3. Encre pour jet d'encre selon la revendication 1 ou 2, dans laquelle l'ester d'acide gras insaturé affiche un indice d'iode de 130 à 200.

4. Encre pour jet d'encre selon l'une quelconque des revendications 1 à 3, dans laquelle la résine comprend une résine choisie parmi une résine colophane ou une résine de terpène.

5. Encre pour jet d'encre selon l'une quelconque des revendications 1 à 4, dans laquelle la résine comprend la résine de colophane et la résine de terpène.

6. Encre pour jet d'encre selon l'une quelconque des revendications 1 à 5, dans laquelle l'encre est durcie par une polymérisation oxydative.

7. Encre pour jet d'encre selon l'une quelconque des revendications 1 à 6, dans laquelle l'ester d'acide gras insaturé a été soumis à une désaération.

8. Procédé de formation d'une image par jet d'encre par l'utilisation d'une encre pour jet d'encre telle que revendiquée dans l'une quelconque des revendications 1 à 7, le procédé comprenant :
l'éjection de l'encre pour jet d'encre affichant une température supérieure à une température d'un support d'enregistrement sur le support d'enregistrement pour former une image.
